# EUROPEAN PATENT APPLICATION

(11) **EP 2 154 412 A1**
(43) Date of publication of application: **17.02.2010**
(21) Application number: 09166562.0
(22) Date of filing: 28.07.2009
(51) Int. Cl.: F16L 55/054

(54) **Pulsation absorber for installations of fluids using multiple elastomeric tubes**

(30) Priority: 30.07.2008 ES 200802268
(71) Applicant: Bombas Boyser, S.L., 08140 Caldes de Montbui, Barcelona (ES)
(72) Inventor: Jofresa Barbany, Joan, 08140, CALDES DE MONTBUI (Barcelona) (ES)
(74) Representative: Gallego Jiménez, José Fernando

(57) **Abstract**

Pulsation absorber of multiple elastomeric tubes for installations of fluids comprising two hoses made of elastomeric material coaxially arranged inside each other. The pulsating fluid runs through the inner tube; the space comprised between the outer and the inner tube is filled with pressurized gas. In the junction upstream of the pipe there is a flange type connection (2) for coupling the outlet of a fluid propelling element with the pipe. Said connection is inserted in the outer junction of the pipe (1) with the interposition of an O-ring (5).

At the other side of the outer junction, the inner (8) and the outer elastomeric tube (3) are inserted. Outside the outer junction (1) the air pressure control valve (4) is fitted. Downstream of the pipe, the same is closed with a second outer junction that is coupled with both tubes in an identical way.

## Description

### TECHNICAL FIELD

The present hose can be included in the technique of fluid conveying and as a pipe in general, with the particularity of being multiple and flexible.

### STATE OF THE ART

Although in the prior art there are many pipes of different shapes and configurations, it has been difficult to find systems of multiple flexible hoses or pipes of the coaxial type with the possibility of being able to simultaneously house various different fluids.

The following documents have been obtained. It is necessary to underline that all of them are foreign, since no patent or utility model on the subject has been found in the national data bases:
+ GB 784699: "Improvements in or relating to flexible substantially concentric piping" (Pirelli)
   It includes two concentric pipes. Through the inner one a viscous liquid flows while through the outer one steam circulates, in order to regulate temperature.
+ EP 0262081: " Light-weight coaxial type steam recovery hose" (Goodyear)

It consists of a system of two concentric pipes, the outer one being used for steam recovery. Another patent of this type could be W09426592.

All the patents found come across the fact of being able to carry steam through the outer pipe, both for fluid warming or for steam recovery. No document mentions the idea of insulating vibrations, noise or stabilizing the flow rate.

### DETAILED DESCRIPTION OF THE INVENTION

The pulsation absorber for installations of fluids using multiple elastomeric tubes consists of two elastic hoses, preferably made of rubber, having a coaxial configuration and arranged inside each other in a sealed way. Thus, through the inner hose a fluid, that is propelled by a pulsating-delivery pump, flows, while in the outer pipe a chamber of adjustable pressure by means of air, nitrogen or another gas is created.

By regulating in the outer tube a pressure slightly higher than the one existing in the inner tube, said inner tube becomes deformed thus producing a passage reduction thanks to its elastomeric properties (adaptability, flexibility, deformability); at the moment in which a fluid with pulsating flow runs through the inner hose it causes an expansive effect on the elastomeric element that tends to recover its initial cylindrical shape. This deformation is proportional to the momentary flow rate/pressure effect and therefore, since it is a pulsating flow, the deformation is progressively increasing or decreasing as a function of the pulse moment. The same effect but in the reverse order could be obtained with a negative pressure in the outer tube.

As a result, the flow rate/pressure tends to be balanced as the fluid moves forward through the interior of the tube, having a practically constant flow rate and pressure at the equipment exit as a consequence.

Since both (outer and inner) tubes are of elastomeric construction and deformable and therefore flexible, the equipment also acts as a vibration absorber and as a reducer of possible hydraulic noise, that in absence of these elements would be transmitted in a rigid pipe due to the intrinsic properties of a pulsating fluid.

The fluid pulsation absorber using multiple elastomeric tubes is then an element that has a double function in those installations where a pulsating flow exists:
1. It absorbs the pulsations thus eliminating the transitory period and making the flow continuous, which then allows us to use measurement systems such as flow meters, pressure switches, etc..
2. It eliminates vibrations and pressure surges, it reduces noise, therefore extending the life of great length installations.

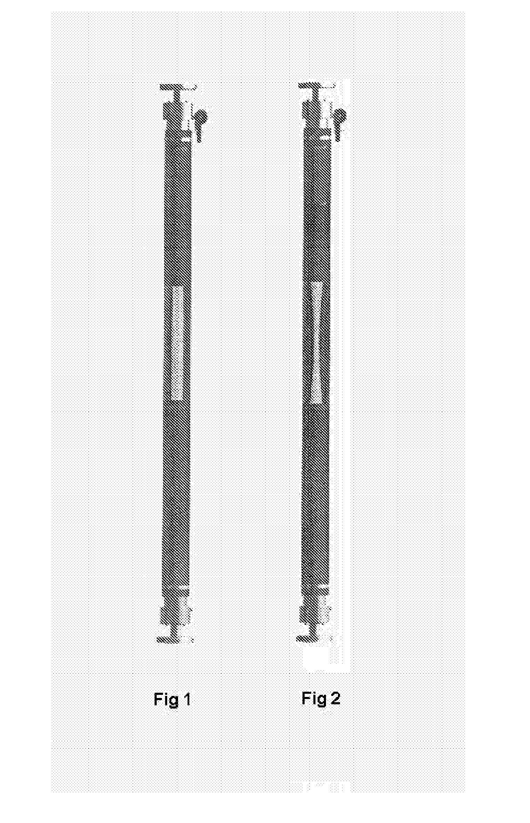

The working principle is as follows:
+ When the absorber is not working, the compressed air that fills the chamber between the two tubes compresses the inner tube (see Fig. 1).
+ When the pump produces the pulsation of fluid, a part of said fluid expands the inner tube, thus compressing the air/gas that was in the area between both hoses, that will tend to expand again (Fig. 2).
+ At the end of the pulsation, the above process is automatically repeated so that the flow becomes linear.

Due to the inherent characteristic of flexibility, the pipe simultaneously absorbs all the vibrations and pressure surges that are produced by the pump.

### BRIEF DESCRIPTION OF THE DRAWINGS

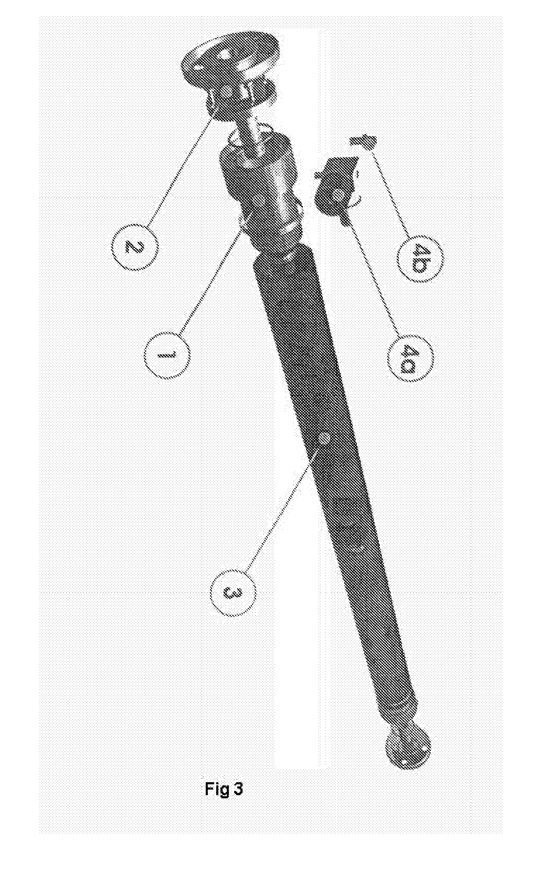

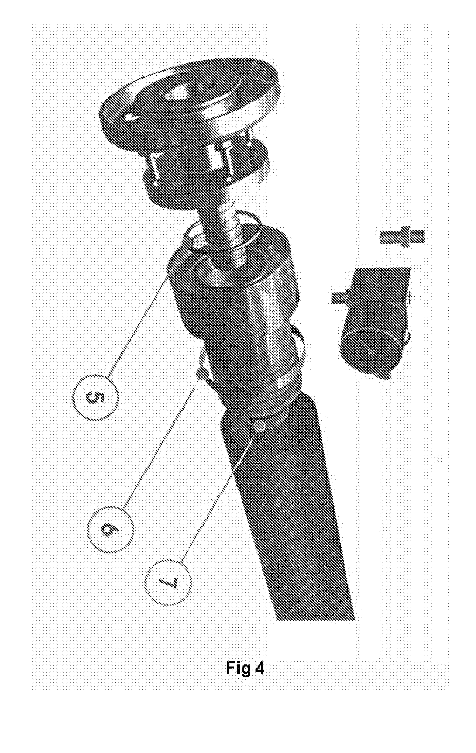

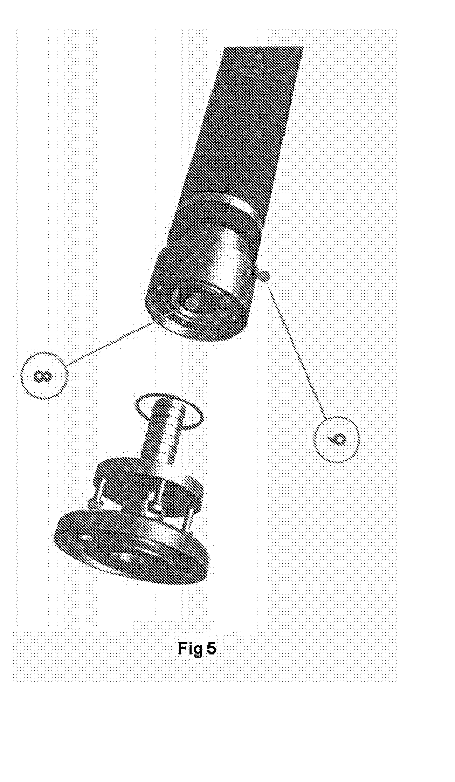

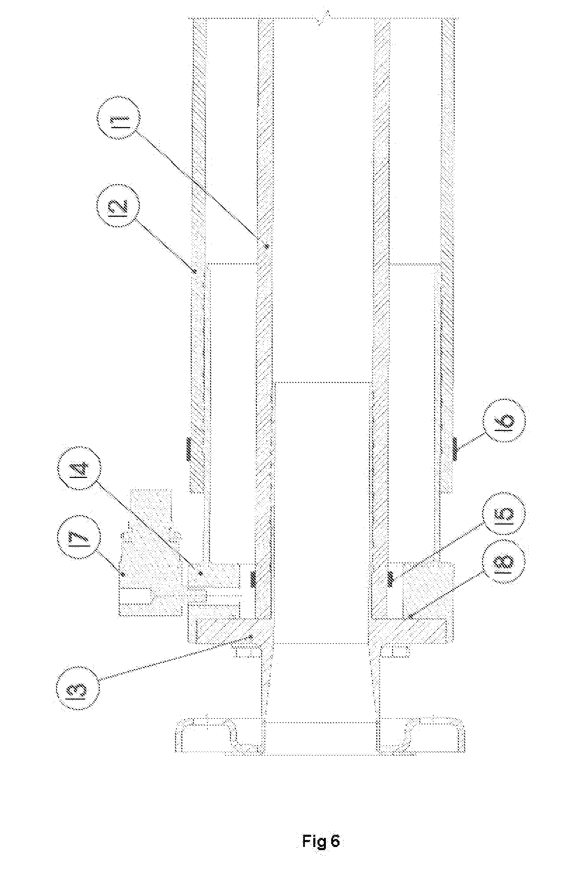

+ Figure 1: Profile view of the pipe according to the invention, mounted, with graphic diagram of the compressed arrangement of the inner tube, previous to the introduction of fluid.
+ Figure 2: Profile view of the pipe according to the invention, mounted, with graphic diagram of the expanded arrangement of the inner tube, after the introduction of fluid.
+ Figure 3: Perspective view of the exploded pipe according to the invention, where the parts that make up the same can be seen.
+ Figure 4: Detail of the exploded perspective view of the pipe according to the invention, where the parts that make up the same can be seen.
+ Figure 5: Detail of the perspective view of the opposite end of the exploded pipe according to the invention, where the parts that make up the same can be seen.
+ Figure 6: Schematic profile view of the pipe according to the invention, mounted.

In all the diagrams the components are identified by means of the following numbers:
(1)- outer junction.
(2)- flange connection.
(3)- (casing) outer tube.
(4a)- air pressure control valve.
(4b)- Inflating valve.
(5)- O-ring.
(6)- outer clamp.
(7)- inner clamp.
(8)- inner tube.
(9)- closure cap.
(11)- inner tube.
(12)- outer tube.
(13)- connection or pipe, inner tube support.
(14)- outer tube support with pressurization inlet.
(15)- closure clamp.
(16)- closure clamp.
(17)- gas pressure controller.
(18)- sealing O-rings.

### EMBODIMENTS OF THE INVENTION

The preferred embodiment of the invention consists of a pipe that includes two tubes (3 and 8) of elastomeric material that are coaxially arranged. Said pipe has a suitable length and section for the type of fluid that will flow through its interior and the characteristics of the pulsation, so that the flow that is pulsating at the inlet will exit as a continuous flow through the outlet.

At the junction of the upstream pipe there is a flange type connection (2) for coupling the outlet of the pump or fluid propelling element with the pipe.

This connection flange is inserted into the junction of the outer pipe (1) with the interposition of an O-ring (5).

At the other side of the outer junction both the outer elastomeric tube (3) and the inner elastomeric tube (8) are inserted. Both clamps (6 and 7) are used to fit both tubes to the outer junction.

Likewise, outside the outer junction (1) the air pressure control valve (4) is fitted, with different possible configurations.

Downstream of the pipe, the same is closed with a second outer junction that is coupled with both tubes in an identical way, as can be seen in Figure 5. The orifice upstream that is used for coupling the gas pressure control valve (4) is closed in this case with the closure cap (9).

Other preferred embodiments of the invention could include different types of gas in the outer pipe, or the existence of more than two concentric tubes. It could even be the fact that part of the tubes were flexible and part rigid or semi-rigid.

Neither would alter the invention the fact of making the fluid flow through the outer pipe employing the inner tube as a pressure and pulsation regulator.

## Claims

1. Pulsation absorber for installations of fluids using multiple elastomeric tubes **characterized in that** it comprises:
■ two hoses made of elastomeric material coaxially arranged inside each other. The pulsating fluid flows through the inner tube; the space comprised between the inner tube and the outer one is filled with pressurized gas.
■ It comprises a first outer junction connecting the inner tube to the outlet of the fluid propelling pump or system by means of a flange type connection. Said junction is also coupled with the outer tube, fastened by a clamp in such a way that the tube is sealed apart from a pressure control valve that keeps the gas pressure contained inside said outer tube, in the space comprised between the outer and the inner hose.
■ It also includes a second junction at the outlet of the inner pipe. Said junction is also coupled with the end of the outer tube, fastened by a clamp in such a way that the tube is sealed apart from a closure cap that keeps the gas pressure contained inside said outer tube, in the space comprised between the outer and the inner hose.

2. Pulsation absorber for installations of fluids using multiple elastomeric tubes, according to claim 1, **characterized in that** the pressurized gas that is in the space delimited by both tubes is air.

3. Pulsation absorber for installations of fluids using multiple elastomeric tubes, according to claim 1, **characterized in that** the pressurized gas that is in the space delimited by both tubes is nitrogen.

4. Pulsation absorber for installations of fluids using multiple elastomeric tubes, according to claim 1, **characterized in that** the gas that is in the space delimited by both tubes has a pressure below the ambient pressure.

5. Pulsation absorber for installations of fluids using multiple elastomeric tubes, according to claim 1, **characterized in that** the gas that is in the space delimited by both tubes has a pressure above the ambient pressure.

6. Pulsation absorber for installations of fluids using multiple elastomeric tubes, according to claim 1, **characterized in that** the pressure control valve that incorporates the junction at the inlet of the outer hose includes an inflating valve.

7. Pulsation absorber for installations of fluids using multiple elastomeric tubes, according to claim 1, **characterized in that** the elastomeric material of the hoses is rubber.

8. Pulsation absorber for installations of fluids using multiple elastomeric tubes, according to claim 1, **characterized in that** the connection of the junction with the inner pipe includes an O-ring.

9. Pulsation absorber for installations of fluids using multiple elastomeric tubes, according to claim 1, **characterized in that** the number of concentric hoses is greater than two, or several non-coaxial hoses are inside the outer hose.

10. Pulsation absorber for installations of fluids using multiple elastomeric tubes, according to claim 1, **characterized in that** the outer hose is made of rigid or semi-rigid material.
